# EUROPEAN PATENT APPLICATION

(11) **EP 1 244 326 A1**
(43) Date of publication of application: **25.09.2002**
(21) Application number: 00979032.0
(22) Date of filing: 30.11.2000
(51) Int. Cl.: H04Q 9/00, H04B 3/54, H04L 12/28

(54) **HOUSE CODE SETTING METHOD AND POWER LINE TRANSPORT COMMUNICATION SYSTEM**

(71) Applicant: MITSUBISHI DENKI KABUSHIKI KAISHA, Tokyo 100-8310 (JP)
(72) Inventor: TSUBONE, Nobuhiro, Mitsubishi Denki K. K., Tokyo 100-8310 (JP)
(74) Representative: Pfenning, Meinig & Partner GbR
(86) International application number: JP0008478
(87) International publication number: WO02045458

(57) **Abstract**

There are provided a plurality of terminals (10, 20, 30) which are connected by a power line (1) and exchange information through the power line (1) and to which intrinsic terminal identifiers are respectively given, and the feature is that each of the terminals (10, 20, 30) holds a house code to prevent interference between another system and its own system, and the house code is generated as a code common to the same system on the basis of the terminal identifier given to a master terminal selected from the respective terminals (10, 20, 30) belonging to the same system.

## Description

### TECHNICAL FIELD

The present invention relates to a setting method of a house code for identifying a terminal, in a system in which a plurality of terminals exchange information through a power line as a communication medium, as one in the same system, and a communication system using this house code setting method.

### BACKGROUND ART

A conventional power line carrier communication system has been used as communication means between respective structural appliances in an electric energy measurement system, a home security system, or the like. However, as the domestic use of a personal computer and various other information appliances is rapidly expanded, it is expected that the power line carrier communication system comes into wide use as "household communication means not requiring new line laying" intended for these information appliances.

Conventionally, house code setting of the power line carrier communication system has been mainly carried out by specialized maintenance personnel in a power company, a home security company or the like which operates and manages the system. However, in order to make the power line carrier communication system popular in the home, it is essential that the common home consumer can easily carry out the house code setting.

In the conventional electric energy measurement system, the home security system, or the like, the system is constituted by a plurality of terminals installed in the facilities. For example, in an apartment house, since a system installed in a certain house is connected to another system of a neighborhood house through a power line, there is a possibility that interference occurs. Then, as an identification method for making a distinction from a terminal of the system of the neighborhood house, a method is adopted in which a house code intrinsic to each system is included in transmission data exchanged in the system, and mutual communication is enabled only between terminals in which the house codes are coincident with each other, and this is prescribed by the radio law of Japan.

As one of methods of setting the house code, there is a method in which a house code setting switch made of a DIP switch, a rotary switch, or the like is provided at each terminal, and a house code assigned to the system is set in each terminal one by one. However, there is a problem that this method is complicated, and setting errors are apt to occur when the number of terminals is large.

Techniques of house code setting methods to solve these problems are disclosed in Japanese Patent Laid-Open No. 204895/1988, No. 223092/1996, and the like. According to these setting techniques, a house code setting switch made of a DIP switch or the like is provided in a master terminal, and after a house code previously assigned to a system including the terminal is set into the master terminal by the house code setting switch, the master terminal is coupled to a slave terminal by some medium different from an existing power line receiving commercial power, and the house code set in the master terminal is transferred to the slave terminal to be set.

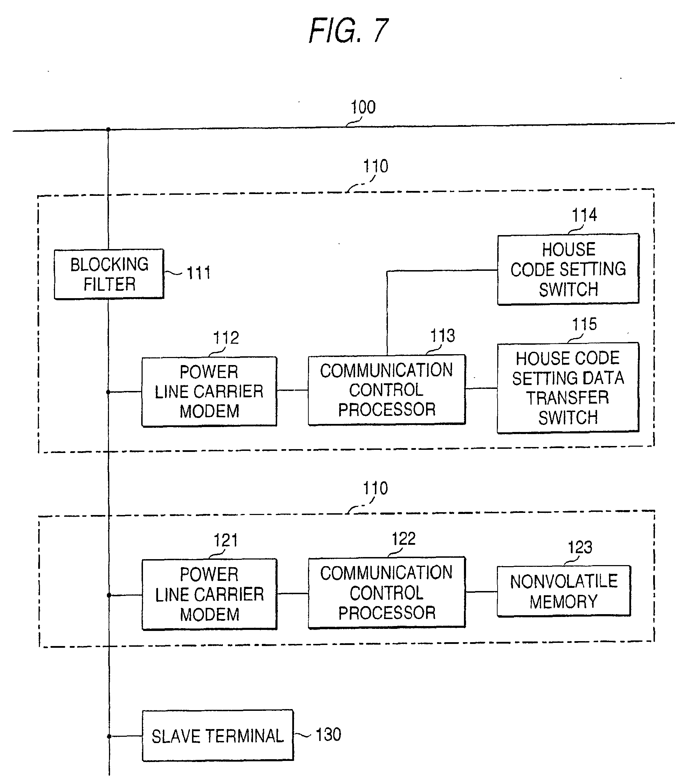

FIG. 7 shows an example of the constitution in a conventional setting method. In the drawing, reference numeral 100 designates an existing power line for receiving the supply of commercial power; 110, a master terminal; 111, a blocking filter; 112, a power line carrier modem for controlling transmission and reception of a carrier wave on the power line; 113, a communication control processor constituted by a microprocessor, a RAM, an external input/output function, and the like; 114, a house code setting switch constituted by a DIP switch, a rotary switch, or the like; and 115, a house code setting data transmission switch.

Besides, reference numeral 120 designates a slave terminal; 121, a power line carrier modem for controlling transmission and reception of data on the power line; 122, a communication control processor constituted by a microprocessor, a RAM, an external input/output function, and the like; 123, a rewritable nonvolatile memory constituted by a flash ROM or the like; and 130, a slave terminal having the same structure as the slave terminal 120. Further, reference numeral 140 designates a tentative power line laid to set the house codes to the respective slave terminals 120 and 130, which is removed after the house code setting.

Next, the operation will be described. In the master terminal 110, when the house code setting data transmission switch 115 is operated after the house code is set in the house code setting switch 114, the communication control processor 113 reads the house code, and transmits the transmission data including the house code to the tentative power line 140 through the power line carrier modem 112, notifying the house code to the slave terminal 120. The tentative power line 140 is connected to the existing power line 100 through the blocking filter 111, and the transmission data including the house code does not leak to the existing power line 100. Besides, the master terminal 110 receives power from the existing power line 100 through the blocking filter 111, and the power is also supplied to the tentative power line 140.

On the other hand, the slave terminal 120 is connected to the tentative power line 140, and is operated by the power supplied to the tentative power line 140. In the slave terminal 120, the communication control processor 122 receives the transmission data transmitted from the master terminal 110 through the power line carrier modem 121, and writes the house code included in the transmission data into the nonvolatile memory 123, and subsequently uses the house code as its own house code. Besides, the slave terminal 130, similarly, receives the transmission data including the house code in order to set the house code to be subsequently used as its own house code.

Since the conventional power line carrier communication system is constructed as described above, it has five problems set forth below.

The first problem is that the master terminal 110 demands the blocking filter 111 to set the house code, and this raises the manufacturing cost of the master terminal 110. In the electric energy measurement system disclosed in Japanese Patent Laid-Open No. 223092/1996, the blocking filter 111 is detachably attached, therefore, solving the problem of a rise in the manufacturing cost of the master terminal 110. However, there remains a problem of requiring an individual device for setting the house code, which is detachably attached to the master machine and incorporates the blocking filter 111. The individual device like this is generally a tool carried by a maintenance personnel of a company which operates the system, and in the case where the common home consumer carries out the setting of the house code, the method of using such an individual device is not suitable.

The second problem is that when a certain system is installed, in order to assign a house code not causing interference with another system which is installed in the vicinity thereof and is connected by a common power line, it becomes necessary to form and manage an organization for consolidated managing of the house codes, and the cost necessary for this increases the cost burden of the user, and as a result, there is a possibility that the spread of the system is hindered. The third problem is that when the house code is set, it is necessary to get the house code to be assigned to the system from an operation agency of a house code management organization. It is conceivable for facilitating widespread use of terminals to adopt a distribution mode that the terminal used for the power line carrier communication system is sold in a retail store of electric appliances, and the common home user can directly purchase it. In this case, it is possible to conceive a method in which a house code is provided to a purchaser through the retail store, or a method in which the common consumer as the purchaser directly inquires the house code management agency to get it. However, the former method causes a rise in selling costs by the increase of selling service of the retail store, and the latter method causes the increase and complicatedness of work necessary from the purchase of the terminal to the start of the operation of the system, and there is a possibility that this hinders the spread of the system.

The fourth problem is that in the case where the common home consumer sets a house code by a house code setting switch, the consumer does not always set a regular house code to which uniqueness is assured, and in the case where the system is operated by setting an irregular house code, there is a possibility that interference with the other system connected by a common power line occurs. Incidentally, in order to make a plurality of terminals installed in a certain house mutually communicate with each other, even if the house codes set in the respective terminals are not regular, they have only to coincide with each other. However, if they are not regular, there is a possibility that the interference with another system occurs. Even in this method, although there is no problem if the setting is made by the maintenance staff member of the system operation company as business duties, it is not a method suitable for the common home consumer who does not have a duty to the operation of the neighborhood other system or is difficult to give the duty.

The fifth problem is that in order to set the house code to the slave terminals 120,130, it is necessary to provide the tentative power line different from the existing power line receiving the supply of the commercial power between the master terminal 110 and the slave terminals 120,130, and the setting operation of the house code becomes troublesome.

The present invention has been made to solve the above problems and has an object to provide a house code setting method and a power line carrier communication system [1] which does not require a blocking filter or an individual device for setting a house code when the house code is set, [2] which does not require a house code management organization, [3] which does not require the labor of getting the house code from an operation agency of a house code management organization, [4] which enables the common home consumer to certainly set a regular house code to which uniqueness is assured, and [5] which does not require laying a tentative power line different from an existing power line receiving commercial power between a master terminal and a slave terminal.

### DISCLOSURE OF THE INVENTION

In a house code setting method of the present invention for setting a house code into a plurality of terminals, which are connected by a power line and exchange information through the power line and to which intrinsic terminal identifiers are respectively given, to prevent interference between a system to which the terminals belong and another system. the house code setting method is characterized in that, the house code is generated as a common code in the same system, and is set into the respective terminals, on the basis of a terminal identifier given to a master terminal selected from the respective terminals belonging to the same system.

Besides, a feature is that each of the terminals includes a master-slave setting switch for setting a "master" or a "slave", and in a case where the master-slave setting switch is set to the "master", the house code is generated on the basis of its own terminal identifier and is set into its own terminal.

Further, a feature is that in a case where the master-slave setting switch is set to the "slave", the house code set into the master terminal is read out, and the house code is set into its own terminal.

Besides, a feature is that in the case where the master-slave setting switch is set to the "slave", a tentative house code is generated on the basis of the identifier of the master terminal, mutual communication with the master terminal is attempted on the basis of the tentative house code by using the power line, and in a case where the mutual communication is successful, the tentative house code is set into its own terminal as a regular house code.

Further, a feature is that terminal identifiers of other terminals allowed to communicate with the master terminal are previously set into the master terminal, and in a case where mutual communication is demanded from a terminal having a terminal identifier other than the terminal identifiers, the mutual communication is denied.

A power line carrier communication system of the present invention includes a plurality of terminals which are connected by a power line and exchange information through the power line and to which intrinsic terminal identifiers are respectively given, and is characterized in that each of the terminals holds a house code to prevent interference between another system and its own system, and the house code is generated as a code common to the same system on the basis of the terminal identifier given to a master terminal selected from the respective terminals belonging to the same system.

In addition, a feature is that each of the terminals comprises a storage portion into which the house code is set, a master-slave setting switch for setting a "master" or a "slave", and a control portion for, in a case where the master-slave setting switch is set to the "master", generating the house code on the basis of its own terminal identifier and setting it into its own storage portion.

Further, a feature is that the control portion reads out the house code from the storage portion of the master terminal in a case where the master-slave setting switch is set to the "slave", and sets this house code into its own storage portion.

Besides, a feature is that in a case where the master-slave setting switch is set to the "slave", the control portion generates a tentative house code on the basis of the identifier of the master terminal, attempts mutual communication with the master terminal by using the power line on the basis of the tentative house code, and sets the tentative house code in its own storage portion as a regular house code in a case where the mutual communication is successful.

Further, a feature is that terminal identifiers of other terminals allowed to communicate with the master terminal are previously set into the storage portion of the master terminal, and in a case where mutual communication is demanded from a terminal having a terminal identifier other than these terminal identifiers, the mutual communication is denied.

Besides, a feature is that a format of a MAC address in conformity to the ISO8802 standard is used as a format of the terminal identifier.

A power line carrier communication system of the present invention comprises a communication system including at least one terminal for exchanging information by power line carrier communication, and a relay device for relaying the communication system to a system using communication means other than the power line carrier communication, and is characterized in that the terminal of the communication system and the relay device hold house codes to prevent interference between another system and their own system, and a common code is always set as the house code.

Besides, a feature is that the terminal of the communication system is allowed to communicate with the relay device in a fixed period from a point of time of installation unconditionally, and after the fixed period has elapsed, the terminal is allowed to communicate with the relay device under a condition that a contract is made between a user of the terminal and an owner of the relay device or an operations manager.

### BRIEF DESCRIPTION OF THE DRAWINGS

FIG. 1 is a block diagram showing a power line carrier communication system of a preferred embodiment 1.
FIG. 2 is a flowchart showing a house code setting method according to the preferred embodiment 1.
FIG. 3 is a block diagram showing a power line carrier communication system according to a preferred embodiment 2.
FIG. 4 is a view showing a terminal identifier input screen of a slave terminal.
FIG. 5 is a view showing a terminal identifier input screen of a master terminal.
FIG. 6 is a block diagram showing a power line carrier communication system according to a preferred embodiment 3.
FIG. 7 is a block diagram showing a conventional power line carrier communication system.

### BEST MODE FOR CARRYING OUT THE INVENTION

Hereinafter, embodiments of the present invention will be described with reference to the accompanying drawings.

### Preferred embodiment 1

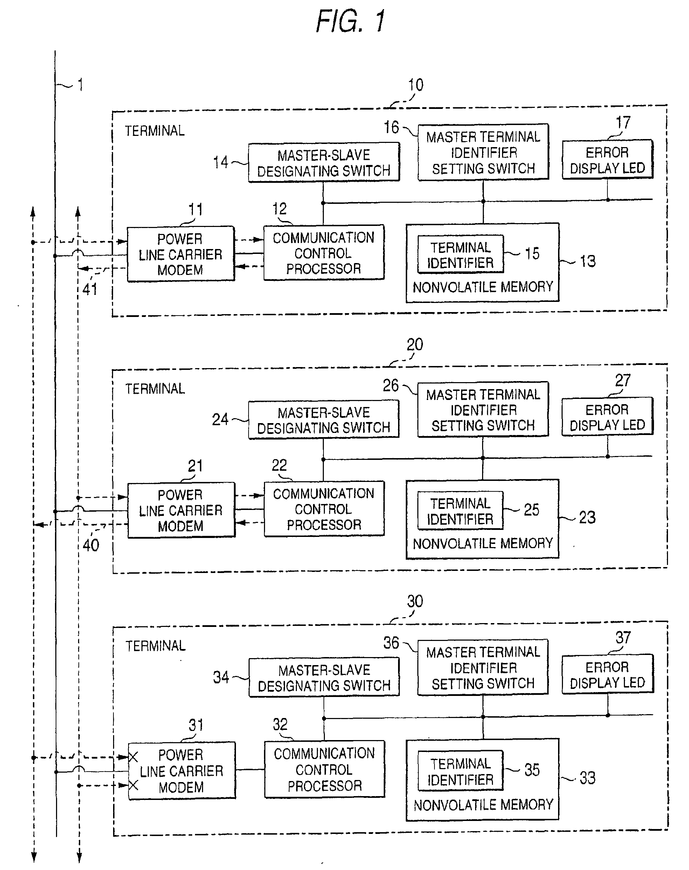

FIG. 1 is a block diagram showing the constitution of a power line carrier communication system of the preferred embodiment 1.

In the drawing, reference numerals 10, 20 and 30 designate terminals having the same structure; 11, 21, 31, power line carrier modems for controlling data transmission and reception on a power line; 12, 22, 32, communication control processors each constituted by a microprocessor, a RAM, an external input/output function, and the like; 13, 23, 33, nonvolatile memories each of which is constituted by a flash ROM or the like and the contents of which can be rewritten by the communication control processors 12, 22, and 32; 14, 24, 34, master-slave designating switches for designating the terminals 10, 20 and 30 as master terminals or slave terminals; and 15, 25, 35, terminal identifiers of the terminals 10, 20 and 30 written in the nonvolatile memories 13, 23 and 33 at the manufacture stage of the terminals 10, 20 and 30 to uniquely identify the terminals 10, 20 and 30.

Besides, reference numerals 16, 26 and 36 designate master terminal identifier setting switches constituted by DIP switches, rotary switches or the like and used for setting a terminal identifier of a master terminal in the case where the terminals 10, 20 and 30 are specified as slave terminals; 17, 27, and 37, error display LEDs for making a user recognize the error occurrence, in a case where the error occurs in a processing executed by the communication control processors 12, 22 and 32; 40, a link establishment demand packet by which the slave terminal demands a trial of mutual communication with the master terminal; and 41, a link establishment response packet which the master terminal transmits in response to the link establishment demand packet.

Next, the operation will be described.

First, the user selects one master terminal out of the terminals 10, 20 and 30 which the user intends to constitute a system. In this embodiment, it is assumed that the terminal 10 is selected as the master terminal. At this time, the user sets the "master" mode on the master-slave designating switch 14 of the terminal 10. In the terminal 10, when the master-slave designating switch 14 is set to the "master", the communication control processor 12 reads out the terminal identifier 15 previously written in the nonvolatile memory 13, performs a specific mapping to automatically generate a house code from the terminal identifier 15, then the communication processor 12 writes and holds it as its own house code in the nonvolatile memory 13.

Here, the foregoing specific mapping is required to be a one-to-one mapping. In the house code obtained by performing the one-to-one mapping on the terminal identifier to which uniqueness is assured, its uniqueness is inevitably assured, therefore it becomes possible to prevent interference between different systems. Incidentally, the foregoing specific mapping is common to the respective terminals 10, 20 and 30, and is previously mounted at the time of manufacture of the respective terminals as a program executed on the respective communication control processors 12, 22 and 32.

By the above processing, the house code setting operation to the master terminal 10 is completed.

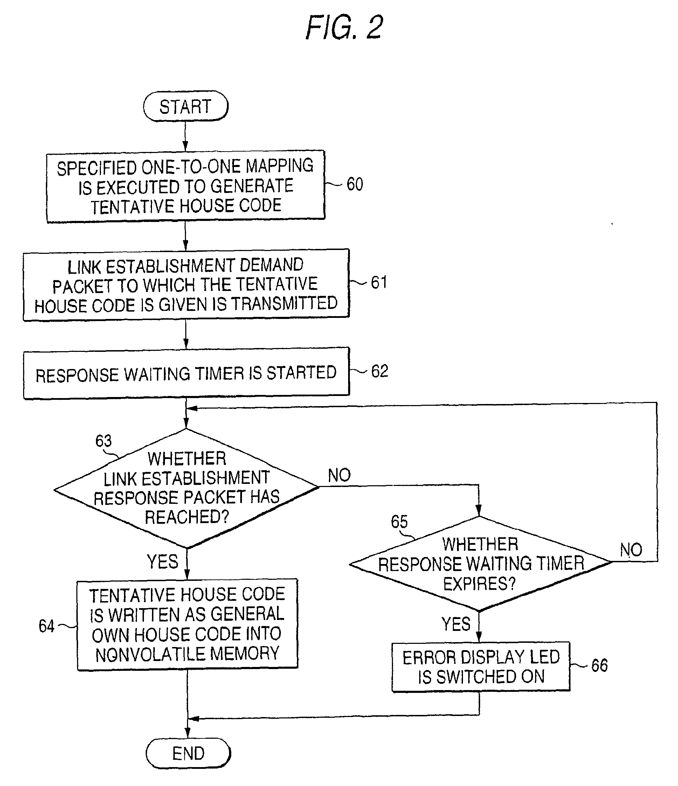

Next, setting of the house code into the slave terminal will be described with reference to a flowchart shown in FIG. 2.
First, after the house code setting operation to the terminal 10 is ended, when the user of the system sets the "slave" on the master-slave designating switch 24 with respect to the terminal 20 which becomes the slave terminal in this system, and sets a value of the terminal identifier 15 given to the master terminal 10 into the master terminal identifier setting switch 26, the communication control processor 22 reads out the value set into the master terminal identifier setting switch 26, and generates a tentative house code from the value on the basis of the foregoing specific mapping (step 60).

Here, the values of the terminal identifiers of the respective terminals 10, 20 and 30 are stored in the nonvolatile memories, and the user can not directly read them. However, the user can easily set the values of the respective terminal identifiers, provided the values of the respective terminal identifiers are recited on the case surfaces of the respective terminals 10, 20 and 30.

Then, the link establishment demand packet 40 given the generated tentative house code is transmitted to the other terminals 10 and 30 (step 61). Besides, the communication control processor 22 starts a built-in response waiting timer concurrently with the transmission of the link establishment demand packet 40 (step 62).

Although the link establishment demand packet 40 reaches both the terminals 10 and 30 through the existing power line 1, since a house code is not set into the terminal 30, it is discarded by the power line carrier modem 31. On the other hand, since the house code is already set in the terminal 10, the power line carrier communication modem 11 compares its own house code with the house code given to the link establishment demand packet 40, and if they are coincident with each other, the power line carrier communication modem 11 delivers the link establishment demand packet 40 to the communication control processor 12. When receiving the link establishment demand packet 40, the communication control processor 12 transmits the link establishment response packet 41 in response to it.

Although the link establishment response packet 41 reaches both the terminals 20 and 30 through the power line 1, since the house code is not set into the terminal 30, it is discarded by the power line carrier modem 31.

On the other hand, the terminal 20 monitors the arrival of the link establishment response packet 41 (step 63), and when the link establishment response packet 41 reaches the terminal 20, the tentative house code is compared with the house code given to the link establishment response packet 41, and if they are coincident with each other, the link establishment response packet 41 is delivered to the communication control processor 22.

When receiving the link establishment response packet 41, the communication control processor 22 judges that the mutual communication with the master terminal on the basis of the tentative house code is successful, and writes the tentative house code as its own regular house code into the nonvolatile memory 23 to hold it (step 64).

At step 63, in the case where the link establishment response packet 41 does not reach, the communication control processor 22 judges whether the response waiting timer already expires (step 65), and when the response waiting timer does not expire, the procedure is returned to the step 63. When the response waiting timer already expires, the communication control processor 22 judges that some error occurs, and turns on the error display LED 27 to notify the user of the occurrence of the error (step 66). Then, the tentative house code is not set as its own house code, but the state where the house code of the terminal 20 is not set is continued.

In this case, the user confirms whether there is an error in the switch setting of each of the terminals 10 and 20, and if there is an error, the user corrects it, and then, again tries the house code setting of the terminal 20 on the basis of the foregoing procedure through operations such as turning on the power source of the terminal 20 once more. With respect to the terminal 30, the house code setting can be also carried out by performing the same procedure as the case of the terminal 20.

Incidentally, at this time, the link establishment demand packet transmitted by the terminal 30 to the terminal 10 which is the master terminal is also received by the terminal 20 in which the house code is already set. However in a communication protocol of the power line carrier communication system of this embodiment, since it is stipulated that only the master terminal can receive the link establishment demand packet, the link establishment demand packet is discarded by the communication control processor 22 of the terminal 20 as the slave terminal. Therefore, the link establishment demand packet which has reached the terminal 20 does not cause a problem.

Similarly, the link establishment response packet transmitted to the terminal 30 by the terminal 10 in response to the link establishment demand packet from the terminal 30 is also received by the terminal 20. However, since, in the communication protocol of the power line carrier communication system of this embodiment, it is stipulated that the link establishment response packet can be received only in the state of receiving the link establishment response packet after the link establishment demand packet is transmitted, the link establishment response packet is discarded by the communication control processor 22 of the terminal 20 which is not in the above state at this point of time. Therefore, the link establishment demand packet which has reached the terminal 20 does not cause a problem.

Incidentally, since the terminal identifier given to each terminal is used as input information for automatically generating the house code to which uniqueness can certainly assured as described above, it is required to assure uniqueness in all terminals supplied at least in Japan in consideration of a fact that an installation place of each terminal is changed by house-moving of the user, conveyance between the users, or the like. Further, in consideration of a fact that power supply is performed in almost all countries in the world, the power line carrier communication system under this embodiment has a possibility of wide spread use all over the world, and it is also possible to presume that each terminal is distributed over the border, therefore it is desirable that the terminal identifier for each terminal can assure uniqueness in all terminals supplied to all the world.

However, in this case, it is necessary to form an organization for internationally and concentrically controlling terminal identifiers with respect to every terminal supplied by different manufacturers allover the world, and to establish an agency to operate the management organization. However, although it is possible in principle to form such management organization and to establish such operation agency, there are many barriers practically, such as cost, difference in industrial policy of each country, difference in business policy among respective manufacturers, and the like, and many cases are in difficulty.

Then, there is a method in which a format of a MAC address conformed to the ISO8802 standard is used as a format of the terminal identifier. The ISO8802 standard is a rare example in which a management organization for internationally and concentrically managing terminal identifiers is formed and the organization is operated. The format of the MAC address conformed to the ISO8802 standard includes a mechanism which enables unique identification in the environment where different manufacturers in all the world provide LAN products based on the CSMA/CD system or the like, and further, it is constituted by 22 bits of a manufacturer identifier and 24 bits of an individual identifier, and an address space has a sufficient margin, so that it is possible to assign an address space to the respective terminals of the power line carrier communication system as well.

Accordingly, in the power line carrier communication system of this embodiment, using the format of the MAC address conformed to the ISO8802 standard as the format of the terminal identifier of each terminal enables to uniquely identify each terminal in the environment in which different manufacturers in all the world provide terminals of the power line carrier communication system, without newly forming an organization for uniquely managing the terminal identifiers all over the world and its operation agency.

As described above, according to the power line carrier communication system of this embodiment, at the respective terminals 10, 20 and 30, the terminal identifiers each having the MAC address format conformed to the ISO8802 standard are stored in the nonvolatile memories 13, 23 and 33 at the time of manufacturing, and when the house code is set into some system, the one terminal 10 is selected from the respective terminals 10, 20 and 30 belonging to the system, the house code for uniquely identifying the system is automatically generated by performing the specific one-to-one mapping on the terminal identifier given to the selected terminal (master terminal) 10, and is set into the master terminal 10 as its own house code.

The terminal identifier given to the master terminal 10 is set into the respective terminals (slave terminals) 20 and 30 other than the master terminal 10, the respective terminals 20 and 30 form tentative house codes by performing the specific one-to-one mapping on the set terminal identifiers, and mutual communication with the master terminal 10 is attempted by using the existing power line 1 on the basis of the tentative house codes, and only in the case where the mutual communication is successful, the tentative house codes are set into the respective slave terminals 20 and 30 as the regular house codes .

Accordingly, the blocking filter or the individual device for setting the house code, a specific house code management organization, and user's labor to get the house code from an operation agency of a house code management organization are not required respectively at the time of the house code setting. Further, a common home consumer not having a duty of system operations and expert knowledge is enabled to certainly set the regular house code to which uniqueness is assured. And it is not necessary to lay a tentative power line between the master terminal 10 and the respective slave terminals 20 and 30, which is different from the existing power line 1 receiving the supply of commercial power.

Further, if the terminal identifier having the format of the MAC address conformed to the ISO8802 standard is used to generate the house code, in future, when the power line carrier communication system is established as international standard specification in the ISO or the like, its application becomes possible without changing the house code setting method.

### Embodiment 2

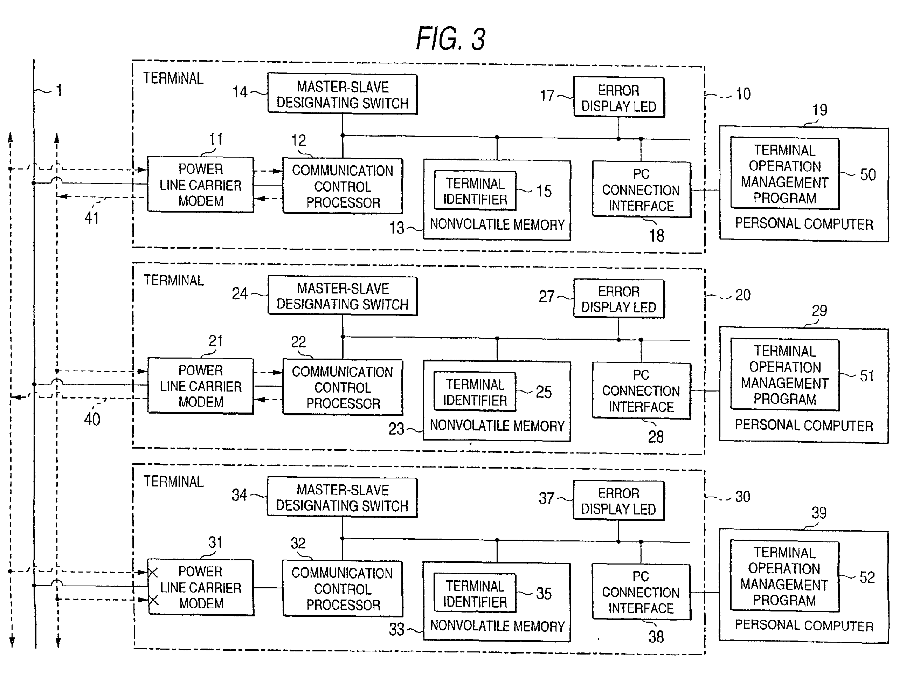

Next, a power line carrier communication system of embodiment 2 will be described with reference to FIG. 3. The embodiment 2 is different from the embodiment 1 shown in FIG. 1 in that the master terminal identifier setting switches 16, 26 and 36 are removed from respective terminals 10, 20 and 30, and instead thereof, personal computer connection interfaces 18, 28 and 38, personal computers 19, 29 and 39 connected to the respective personal computer connection interfaces, terminal operation management programs 50, 51 and 52 operating on the personal computers are added to the respective terminals 10, 20 and 30. Incidentally, structural parts identical to or equivalent to the embodiment 1 are designated by the same symbols, and their description is omitted.

Next, the operation will be described.

First, when the terminal 10 is designated as a master terminal, a communication control processor 12 generates its own house code in the terminal 10 in a similar method to that in the embodiment 1, and writes the house code into the nonvolatile memory 13. Further, in order to urge the user to set terminal identifiers of respective slave terminals which are allowed to communicate with the terminal 10 designated as the master terminal, the communication control processor 12 transmits a signal to request the input of the setting information through the personal computer connection interface 18 to the terminal operation management program 50 operating on the personal computer 19 connected to the terminal 10.

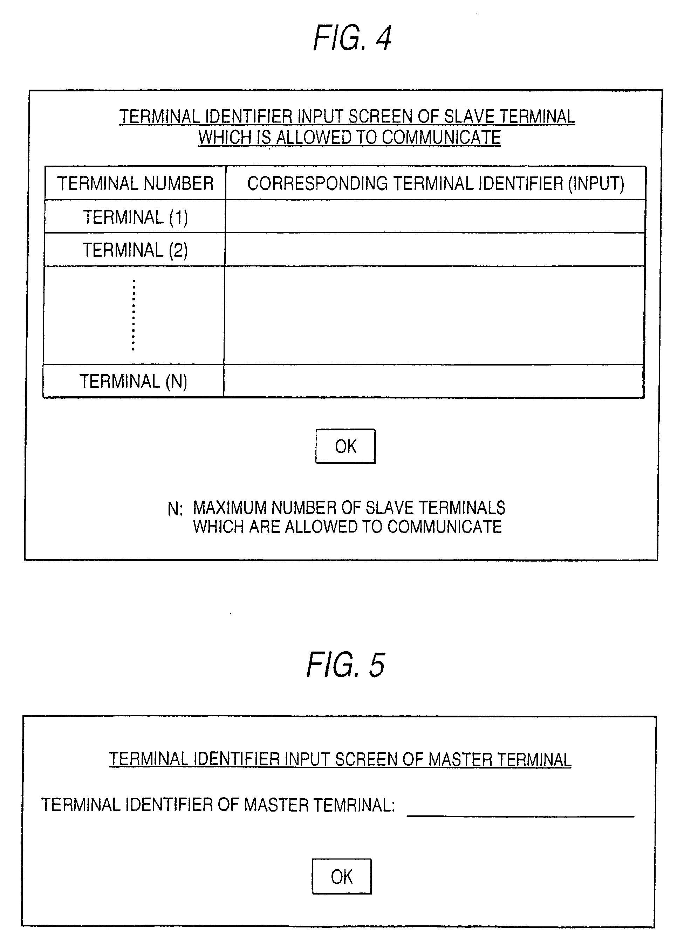

When receiving the request signal, the terminal operation management program 50 displays an input screen as shown in FIG. 4 on a display device of the personal computer 19. On the input screen, the user inputs, into input columns of the terminals (1) and (2) on the input screen, respective terminal identifiers of the terminals 20 and 30 as the terminal identifiers of the respective slave terminals which are allowed to communicate with the terminal 10, and then, clicks OK. When the OK is clicked, the terminal operation management program 50 transmits the respective terminal identifiers of the terminals 20 and 30 to the communication control processor 12 through the personal computer connection interface 18. And the communication control processor 12 writes the respective terminal identifiers, as the terminal identifiers of the slave terminals which are allowed to communicate, into the nonvolatile memory 13 to hold them.

When the setting operation of the house code to the terminal 10 and the setting operation of the terminal identifiers of the slave terminals which are allowed to communicate are completed, the user of this system, in the terminal 20 as the slave terminal, sets the master-slave designating switch 24 to the "slave". When the master-slave designating switch 24 is set to the "slave", in order to urge the user to set the terminal identifier of the master terminal, a communication control processor 22 transmits a signal to request the input of the setting information through the personal computer connection interface 28 to the terminal operation management program 51 operating on the personal computer 29 connected to the terminal 20.

When receiving the request signal, the terminal operation management program 51 displays an input screen as shown in FIG. 5 on a display device of the personal computer 29. On the input screen, the user inputs the terminal identifier of the terminal 10 previously recited on the case surface of the terminal 10 as the master terminal, and clicks OK. When the OK is clicked, the terminal operation management program 51 transmits the terminal identifier of the master terminal 10 to the communication control processor 22 through the personal computer connection interface 28.

When receiving the terminal identifier of the master terminal 10, the communication control processor 22 executes the processing procedure shown in FIG. 2, while the value set into the master terminal identifier setting switch 26 in the embodiment 1 is replaced with the value of the received terminal identifier of the master terminal 10. However, in the processing of transmitting the link establishment demand packet, as information (transmission source terminal identifier) for identifying the terminal of the transmission source, the value of the terminal identifier 25 of the terminal 20, together with the "tentative house code", is given to the link establishment demand packet.

In the terminal 10, when receiving the link establishment demand packet, the terminal 10 compares the transmission source terminal identifier given to that with the "terminal identifiers of respective slave terminals, which are allowed to communicate" written in the nonvolatile memory 13. And only in the case where there is a coincidence, it transmits the link establishment response packet, while in the case where there is no coincidence, the link establishment response packet is not transmitted. By the above procedure, similarly to the case of the embodiment 1, the house code setting of the terminal 20 becomes possible.

Besides, with respect to the terminal 30, the house code setting is also carried out by the same procedure as that in the terminal 20.

As described above, according to the power line carrier communication system of this embodiment, the terminal identifiers of the respective slave terminals 20 and 30 which are allowed to communicate are set into the master terminal 10 in addition to the means described in the embodiment 1. And the transmission source terminal identifiers are given to the link establishment demand packets transmitted by the respective slave terminals 20 and 30. In the master terminal 10, when receiving the link establishment demand packet, it compares the transmission source terminal identifier given to that is compared with the "terminal identifiers of respective terminals which are allowed to communicate" written in the nonvolatile memory. And only in the case where there is a coincidence, the link establishment response packet is transmitted.

Thus, even in the case where the user makes an error in the setting of the master terminal identifier to be set into the slave terminals 20 and 30, and the value of the erroneously set master terminal identifier happens to coincide with a terminal identifier of a master terminal belonging to the other system, since the identifiers of the slave terminals 20 and 30 are not set into the master terminal belonging to the other system, the link establishment response packet is not transmitted to the slave terminals 20 and 30 from the master terminal belonging to the other system. As a result, in the slave terminals 20 and 30, error display LEDs 27 and 37 are switched on to make the user immediately recognize the setting error, and more certain setting of the house code becomes possible.

### Embodiment 3

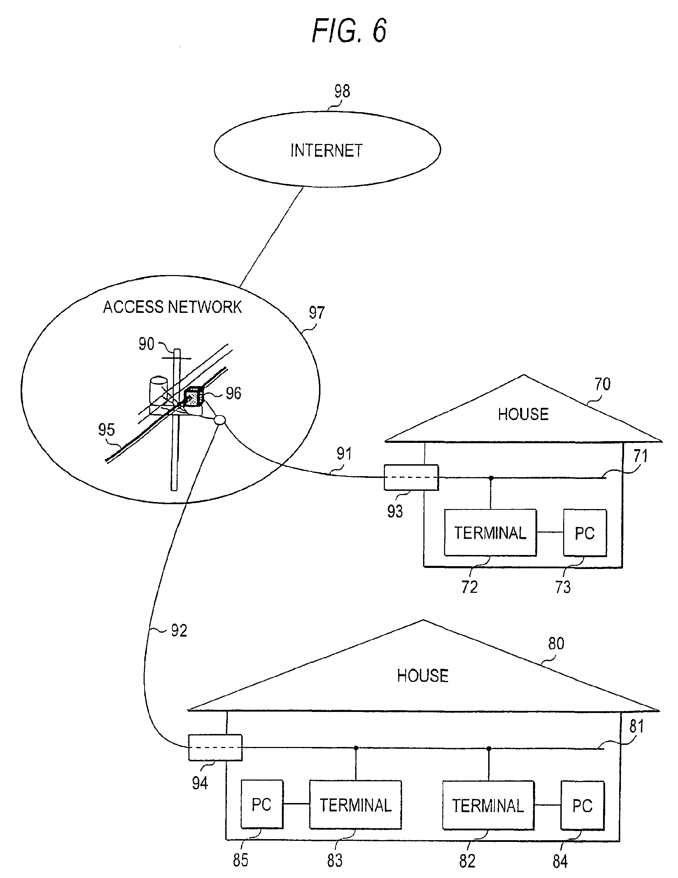

Next, a power line carrier communication system of embodiment 3 will be described with reference to FIG. 6. The embodiment 3 is a power line carrier communication system in which the system of the embodiment 1 or 2 is connected to an outside communication system, and especially includes a system structure connected to the Internet through an access network.

In FIG. 6, reference numeral 70 designates a house in which the power line carrier communication system of the embodiment 1 or 2 is installed; 71, an existing power line in the house 70; 72, a terminal having the same inner structure as the terminal 10 of FIG. 3; 73, a personal computer having the same inner structure as the personal computer 19 of FIG. 3; 80, another house in which the power line carrier communication system of the embodiment 1 or 2 is installed; 81, an existing power line in the house 80; 82, 83, terminals having the same inner structure as the terminal 10 of FIG. 3; and 84, 85, personal computers having the same structure as the personal computer 19 of FIG. 3.

Besides, reference numeral 90 designates an electric pole supplying power to the houses 70 and 80; 91, a low voltage incoming line for supplying power to the house 70; 92, a low voltage incoming line for supplying power to the house 80; 93, a home power distribution board for connecting the low voltage incoming line 91 to the existing power line 71 of the house 70; 94, a home power distribution board for connecting the low voltage incoming line 92 to the existing power line 81 of the house 80; 95, an optical fiber provided between electric poles; 96, a relay device having a function of mutually converting signals of power line carrier communication flowing through the low voltage incoming lines 91 and 92 and optical signals flowing through the optical fiber 95; 97, an access network having the optical fiber 95 as a main communication medium; and 98, the Internet. Incidentally, when the relay device 96 transmits and receives the signal of the power line carrier communication, it operates as one terminal in the power line carrier communication system.

Next, the operation will be described. First, in the terminals 82 and 83 of the house 80, the house code is set so that the personal computers 84 and 85 respectively connected to them can mutually communicate with each other through the existing power line 81 in the house 80, as described in the embodiment 2.

Next, in the terminal 72 of the house 70, in order that the personal computer 73 connected to it can access the Internet 98 through the access network 97, the setting is carried out so that communication with the relay device 96 can be made using the power line carrier communication through the existing power line 71, the home power distribution board 93, and the low voltage incoming line 91. At this time, since the signal used for the communication between the terminal 72 and the relay device 96 is also transmitted to the existing power line 81 in the house 80 through the low voltage incoming line 92, interference with the terminals 82 and 83 must be avoided. For that purpose, it is necessary that the terminal 72 and the relay device 96 have the house code different from the house code set into the terminals 82 and 83.

In order to set the house code into the terminal 72 and the relay device 96, the method described in the embodiment 1 or 2 can be applied. However, the owner of the relay device 96 is generally an internet connection company which operates the access network 97, and on the other hand, the owner of the terminal 72 is generally an inhabitant of the house 70. Like this, since the owners are different from each other, when the house code is set, for example, if the relay device 96 is made the "master", in order to set the house code to communicate with the relay device 96 into the terminal 72, the inhabitant of the house 70 must get the terminal identifier given to the relay device 96 from the internet connection company as the owner of the relay device 96. Accordingly, since there occurs a labor to get the terminal identifier of the relay device 96 from the internet connection company, there again arises a problem similar to the third problem described in the "problem to be solved by the invention" which has been solved in the embodiments 1 and 2.

The problem can be solved by always setting a common house code in the power line carrier communication system constituted by the relay device 96 and the respective terminals 72, 82 and 83. That is, on the assumption that such a house code is set, the house code common to the power line carrier communication system constituted by the relay device 96 and the respective terminals 72, 82 and 83 can be set at respective manufacturing stages of them, and at the time of installing them, the setting of the house code for communication between the relay device 96 and the respective terminals 72, 82 and 83 becomes unnecessary.

Thus, it becomes unnecessary for the user of the respective terminals 72, 82 and 83 to take labor of getting the terminal identifier by which the relay device 96 operates as one terminal in the power line carrier communication system, from the internet connection company which owns the relay device 96.

Here, a specified value which never overlaps with a value of a house code used for communication between terminals has only to be assigned to the common house code. For example, in the case where a positive integer is always assigned to the value of the house code used for communication between the terminals, 0 can be assigned to the value of the common house code.

Incidentally, in FIG. 6, in the case where the personal computer 85 connected to the terminal 83 of the house 80 communicates not only with the personal computer 84 through the terminal 82 in the same house but also with the Internet through the relay device 96 at the same time, the terminal 83 has two house codes, that is, the common house code set at the manufacture stage and the house code for in-house communication set at the installation stage, and selects the house code to be used according to whether a communication partner is the personal computer 84 through the terminal 82 or the Internet through the relay device 96.

Selection of the house code like this, in other words, selection of a communication path specified by the house code can be normally carried out by using the function of a network layer in an OSI reference model. The network layer is constituted by respective protocols such as the IP (Internet Protocol), ARP (Address Resolution Protocol) and the like. In the further development of the foregoing solving method, if the common house code for communication with the relay device 96 is set into all the terminals 72, 82 and 83 at the manufacture stage, and if the terminals 72, 82 and 83 are only installed in the house receiving power supply from the electric pole 90 at which the relay device 96 is installed, connection with the Internet 98 through the relay device 96 becomes possible.

From the above, the internet connection company can realize following internet connection business with the respective terminals 72, 82 and 83 installed in the environment in which they can communicate with the relay device 96 owned by the company. It provides that connection to the Internet 98 through the relay device 96 is enabled unconditionally in a fixed period from the time of installation, and after the fixed period has elapsed, the connection to the Internet 98 through the relay device 96 is enabled under the condition that an entry contract with the user of the respective terminals 72, 82 and 83 is made.

Incidentally, it is needless to say that management of whether the connection to the Internet 98 through the relay device 96 is allowed for the respective terminals 72, 82 and 83 or not can be realized by using an online management function or the like of the relay device 96 in the access network.

As described above, according to the power line carrier communication system of the embodiment 3, the common house code is always set at the time of manufacture into the relay device 96, which is for mutually connecting the power line carrier communication system to the communication system using communication means other than the power line carrier communication, and into the respective terminals 72, 82 and 83 communicating with the relay device 96 by using the power line carrier communication. Therefore it becomes possible to save the labor of delivering the information relating to the terminal identifier of the master terminal necessary for the house code setting methods shown in the embodiments 1 and 2 between the owner of the relay device 96, for example, the internet connection company and the owner of the respective terminals 72, 82 and 83, the common home consumer as the user.

Further, the terminals 72, 82 and 83 communicating with the relay device 96 are allowed to communicate with the relay device 96 unconditionally in the fixed period from the point of time of installation, and after the fixed period has elapsed, the communication with the relay device 96 is allowed under the condition that the entry contract is made between the user of the terminals 72, 82 and 83 and the owner or the operator of the relay device 96. Thus, when the internet connection business is carried out, at the beginning when the user installs the terminals 72, 82 and 83 in the environment in which communication with the relay device 96 can be made, the user is allowed to use a free internet connection service in the fixed period so that the user can directly experience the merits and fun of the Internet, and the business model for accelerating the increase of the number of users, that is, the number of customers can be established.

### POSSIBILITY OF INDUSTRIAL APPLICATION

As described above, since the house code setting method and the power line carrier communication system according to the present invention enable even the common home consumer to certainly set the regular house code to which uniqueness is assured, they are expected to be used as the "household communication means not requiring new line laying" intended for the personal computer and various other household information appliances.

## Claims

1. A house code setting method for setting a house code into a plurality of terminals to prevent interference between a system to which the terminals belong and another system, the terminals being connected by a power line and exchanging information through the power line and to which intrinsic terminal identifiers are respectively given, the house code setting method **characterized in that**
on the basis of a terminal identifier given to a master terminal selected from the respective terminals belonging to the same system, the house code is generated as a common code in the same system, and is set into the respective terminals.

2. The power line carrier communication system according to claim 1, **characterized in that** each of the terminals includes a master-slave setting switch for setting a "master" or a "slave", and when the master-slave setting switch is set to the "master", the house code is generated on the basis of its own terminal identifier and is set into its own terminal.

3. The house code setting method according to claim 2, **characterized in that** when the master-slave setting switch is set to the "slave", the house code set into the master terminal is read out, and the house code is set into its own terminal.

4. The house code setting method according to claim 3, **characterized in that** when the master-slave setting switch is set to the "slave", a tentative house code is generated on the basis of the identifier of the master terminal, mutual communication with the master terminal is attempted on the basis of the tentative house code by using the power line, and in a case where the mutual communication is successful, the tentative house code is set into its own terminal as a regular house code.

5. The house code setting method according to claim 4, **characterized in that** terminal identifiers of other terminals allowed to communicate with the master terminal are previously set in the master terminal, and when mutual communication is demanded from a terminal having a terminal identifier other than the terminal identifiers, the mutual communication is denied.

6. A power line carrier communication system, comprising:
a plurality of terminals being connected by a power line and exchanging information through the power line and to which intrinsic terminal identifiers are respectively given, wherein
each of the terminals holds a house code to prevent interference between another system and its own system, and the house code is generated as a code common to the same system on the basis of the terminal identifier given to a master terminal, the master terminal being selected from the respective terminals belonging to the same system.

7. The power line carrier communication system according to claim 6, **characterized in that** each of the terminals comprises:
a storage portion into which the house code is set;
a master-slave setting switch for setting a "master" or a "slave"; and
a control portion for generating the house code on the basis of its own terminal identifier and setting the own terminal identifier into its own storage portion when the master-slave setting switch is set to the "master".

8. The power line carrier communication system according to claim 7, **characterized in that** the control portion reads out the house code from the storage portion of the master terminal when the master-slave setting switch is set to the "slave", and sets the house code into its own storage portion.

9. The power line carrier communication system according to claim 8, **characterized in that** when the master-slave setting switch is set to the "slave", the control portion generates a tentative house code on the basis of the identifier of the master terminal, and attempts mutual communication with the master terminal by using the power line on the basis of the tentative house code, and sets the tentative house code into its own storage portion as a regular house code when the mutual communication is successful.

10. The power line carrier communication system according to claim 9, **characterized in that** terminal identifiers of other terminals allowed to communicate with the master terminal are previously set in the storage portion of the master terminal, and mutual communication is denied when the mutual communication is demanded from a terminal having a terminal identifier other than the previously set terminal identifiers.

11. The power line carrier communication system according to any one of claims 6 to 10, **characterized in that** a format of a MAC address conformed to the ISO8802 standard is used as a format of the terminal identifier.

12. A power line carrier communication system, comprising:
a communication system comprising at least one terminal for exchanging information by power line carrier communication; and
a relay device for relaying the communication system to a system using communication means other than the power line carrier communication, **characterized in that**
the terminal of the communication system and the relay device hold house codes to prevent interference between another system and their own system, and a common code is always set as the house code.

13. The power line carrier communication system according to claim 12, **characterized in that** the terminal of the communication system allows communication with the relay device in a fixed period from a time of installation unconditionally, and after the fixed period has elapsed, the terminal allows communication with the relay device under a condition that a contract is made between a user of the terminal and an owner or an operation manager of the relay device.

## Amended claims

### Amended claims under Art. 19.1 PCT

**1.** A house code setting method for setting a house code into a plurality of terminals to prevent interference between a system to which the terminals belong and another system, the terminals being connected by a power line and exchanging information through the power line and to which intrinsic terminal identifiers are respectively given, the house code setting method **characterized in that** it comprises steps of:
generating the house code as a common code in the same system on the basis of a terminal identifier given to a master terminal, the master terminal being selected from the respective terminals belonging to the same system; and
setting the generated house code into the respective terminals.

**2.** The power line carrier communication system according to claim 1, **characterized in that** each of the terminals includes a master-slave setting switch for setting a "master" or a "slave", and when the master-slave setting switch is set to the "master", the house code is generated on the basis of its own terminal identifier and is set into its own terminal.

**3.** The house code setting method according to claim 2, **characterized in that** when the master-slave setting switch is set to the "slave", the house code set into the master terminal is read out, and the house code is set into its own terminal.

**4.** The house code setting method according to claim 3, **characterized in that** it comprises steps of:
generating a tentative house code on the basis of the identifier of the master terminal;
attempting mutual communication on the basis of the tentative house code by using the power line, when the master-slave setting switch is set to the "slave"; and
setting the tentative house code into its own terminal as a regular house code when the mutual communication is successful.

**5.** A power line carrier communication system, comprising:
a plurality of terminals being connected by a power line and exchanging information through the power line and to which intrinsic terminal identifiers are respectively given, wherein each of the terminals holds a house code to prevent interference between another system and its own system, and the house code is generated as a code common to the same system on the basis of the terminal identifier given to a master terminal, the master terminal being selected from the respective terminals belonging to the same system.

**6.** The power line carrier communication system according to claim 5, **characterized in that** each of the terminals comprises:
a storage portion into which the house code is set;
a master-slave setting switch for setting a "master" or a "slave"; and
a control portion for generating the house code on the basis of its own terminal identifier and setting the own terminal identifier into its own storage portion when the master-slave setting switch is set to the "master".

**7.** The power line carrier communication system according to claim 6, **characterized in that** the control portion reads out the house code from the storage portion of the master terminal when the master-slave setting switch is set to the "slave", and sets the house code into its own storage portion.

**8.** The power line carrier communication system according to claim 7, **characterized in that** when the master-slave setting switch is set to the "slave", the control portion generates a tentative house code on the basis of the identifier of the master terminal, and attempts mutual communication with the master terminal by using the power line on the basis of the tentative house code, and sets the tentative house code into its own storage portion as a regular house code when the mutual communication is successful.

**9.** The power line carrier communication system according to claim 8, **characterized in that** terminal identifiers of other terminals allowed to communicate with the master terminal are previously set in the storage portion of the master terminal, and mutual communication is denied when the mutual communication is demanded from a terminal having a terminal identifier other than the previously set terminal identifiers.

**10.** The power line carrier communication system according to claim 6, wherein
the master terminal is a relay device for relaying the communication system to another system using communication means other than the power line carrier communication, and
the terminal of the communication system and the relay device hold house codes to prevent interference between another system and their own system, and a common code is always set as the house code.

A house code setting method for setting a house code into a plurality of terminals to prevent interference between a system to which the terminals belong and another system, the terminals being connected by a power line and exchanging information through the power line and to which intrinsic terminal identifiers are respectively given, the house code setting method **characterized in that** it comprises steps of:
generating the house code as a common code in the same system on the basis of a terminal identifier given to a master terminal, the master terminal being selected from the respective terminals belonging to the same system; and setting the generated house code into the respective terminals.

The power line carrier communication system according to claim 1, **characterized in that** each of the terminals includes a master-slave setting switch for setting a "master" or a "slave", and when the master-slave setting switch is set to the "master", the house code is generated on the basis of its own terminal identifier and is set into its own terminal.

The house code setting method according to claim 2, **characterized in that** when the master-slave setting switch is set to the "slave", the house code set into the master terminal is read out, and the house code is set into its own terminal.

The house code setting method according to claim 3, **characterized in that** it comprises steps of:
generating a tentative house code on the basis of the identifier of the master terminal;
attempting mutual communication on the basis of the tentative house code by using the power line, when the master-slave setting switch is set to the "slave"; and setting the tentative house code into its own terminal as a regular house code when the mutual communication is successful.

A power line carrier communication system, comprising:
a plurality of terminals being connected by a power line and exchanging information through the power line and to which intrinsic terminal identifiers are respectively given, wherein
each of the terminals holds a house code to prevent interference between another system and its own system, and the house code is generated as a code common to the same system on the basis of the terminal identifier given to a master terminal, the master terminal being selected from the respective terminals belonging to the same system.

The power line carrier communication system according to claim 5, **characterized in that** each of the terminals comprises
a storage portion into which the house code is set;
a master-slave setting switch for setting a "master" or a "slave"; and
a control portion for generating the house code on the basis of its own terminal identifier and setting the own terminal identifier into its own storage portion when the master-slave setting switch is set to the "master".

The power line carrier communication system according to claim 6, **characterized in that** the control portion reads out the house code from the storage portion of the master terminal when the master-slave setting switch is set to the "slave", and sets the house code into its own storage portion.

The power line carrier communication system according to claim 7, **characterized in that** when the master-slave setting switch is set to the "slave", the control portion generates a tentative house code on the basis of the identifier of the master terminal, and attempts mutual communication with the master terminal by using the power line on the basis of the tentative house code, and sets the tentative house code into its own storage portion as a regular house code when the mutual communication is successful.

The power line carrier communication system according to claim 8, **characterized in that** terminal identifiers of other terminals allowed to communicate with the master terminal are previously set in the storage portion of the master terminal, and mutual communication is denied when the mutual communication is demanded from a terminal having a terminal identifier other than the previously set terminal identifiers.

The power line carrier communication system
the master terminal is a relay device for relaying the communication system to another system using communication means other than the power line carrier communication,
the terminal of the communication system and the relay device hold house codes to prevent interference between another system and their own system, and a common code is always set as the house code.
